(19) Europäisches Patentamt
European Patent Office
Office européen des brevets

(11) EP 2 357 157 B1

(12) EUROPEAN PATENT SPECIFICATION

(45) Date of publication and mention of the grant of the patent:
**11.03.2020 Bulletin 2020/11**

(21) Application number: **09817575.5**

(22) Date of filing: **29.07.2009**

(51) Int Cl.:
***C01B 33/18*** (2006.01) ***G03G 9/08*** (2006.01)
***C09C 1/30*** (2006.01) ***B82Y 30/00*** (2011.01)
***G03G 9/097*** (2006.01)

(86) International application number:
**PCT/JP2009/063494**

(87) International publication number:
**WO 2010/038538 (08.04.2010 Gazette 2010/14)**

# (54) HYDROPHOBIC SILICA FINE PARTICLES AND ELECTROPHOTOGRAPHIC TONER COMPOSITION

HYDROPHOBE FEINE SILICIUMDIOXIDTEILCHEN UND ZUSAMMENSETZUNG FÜR ELEKTROPHOTOGRAPHISCHEN TONER

PARTICULES FINES DE SILICE HYDROPHOBE ET TONER ÉLECTROPHOTOGRAPHIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.10.2008 JP 2008256383**
**02.02.2009 JP 2009021539**

(43) Date of publication of application:
**17.08.2011 Bulletin 2011/33**

(73) Proprietor: **Nippon Aerosil Co., Ltd.**
**Shinjuku-ku**
**Tokyo 163-0913 (JP)**

(72) Inventors:
- **KANEEDA, Masanobu**
**Yokkaichi-shi**
**Mie 510-0841 (JP)**
- **INOUE, Akira**
**Yokkaichi-shi**
**Mie 510-0841 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 860 478** **EP-A1- 1 204 006**
**EP-A2- 1 502 933** **WO-A2-2006/045012**
**JP-A- 2000 258 947** **JP-A- 2004 145 325**
**JP-A- 2004 212 520** **JP-A- 2006 206 413**
**JP-A- 2006 206 414** **US-A- 5 900 315**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of Invention

The present invention relates to hydrophobic silica microparticles added to powder-based materials such as powdered paint, electrophotographic toner, and cosmetics, and to composition for electrophotographic toner utilizing the hydrophobic silica microparticles.

Background of Invention

Microparticles have been widely used as an agent to improve toner fluidity or an agent to adjust electrostatic sensitivity in electrophotography used for a copier, a laser printer, a plain paper facsimile, and the like, the microparticles being improved in the electrostatic sensitivity and hydrophobicity by treating the surface of inorganic oxide powders such as fine silica, titania, and alumina powders with organic matter.

Conventionally, gas phase method silica powder (i.e., silica powder which is produced by a dry method) has been most generally used among the inorganic oxide powders used for the above usage, because the silica particles have a small primary particle size and are expected to exert excellent performance as an external toner additive in respect to the electrostatic sensitivity control and hydrophobization by their surface treatment (see, for example, the following PLTs 1 to 3).

However, since the gas phase method silica particles have a small primary particle size, the silica particles readily form an aggregated particle due to aggregation and an agglomerated particle due to agglomeration. The size of the agglomerated particle is usually from 10 μm to 200 μm or more. When the gas phase method silica particles are subjected to surface treatment, agglomerated particles having a particle size of 10 μm or more are readily formed.

During a step of dispersing into toner, such agglomerated particles are subjected to strong frictional force to become disassembled, which results in dispersion into toner. The gas phase method silica particles which are externally added as a fluidization agent for toner preferably have an average primary particle size of 100 nm or less, and, particularly preferably, 50 nm or less so as to exhibit an excellent effect. However, if the gas phase method silica particles include large agglomerated members formed by strong cohesion force, the silica particles exhibit poor dispersibility into toner and are readily detached from toner as well. As a result, the surfaces of the toner particles are insufficiently coated with silica microparticles. Accordingly, the silica particles have lower efficiency in imparting fluidity to toner, compared to silica particles which have the identical particle size and less agglomerated particles. In addition, deposition of the detached agglomerated particles onto a photoconductor drum causes a white point to appear on a paper, which is responsible for a defective image.

PLT 4 discloses "Silica microparticles obtained by combustion of silicon compound, wherein an average particle size of the microparticles is 0.05 μm or more and less than 0.1 μm; a gradient n of a particle size distribution represented by Rosin-Rammler diagram is 2 or more; and the microparticles do not contain fused particles having a size of 1 μm or more which is determined by a laser diffraction scattering method". These silica microparticles have poor dispersibility and fluidity into toner because while these microparticles can prevent them from being buried into toner particles, the microparticles form agglomerated particles during a process of carrying out a surface treatment such as hydrophobization by blending a surface treatment agent with the silica microparticles.

Citation List

Patent Literature

PLT 1: Japanese Unexamined Patent Application Publication No. 2004-145325

PLT 2: Japanese Unexamined Patent Application Publication No. 2006-99006

PLT 3: Japanese Unexamined Patent Application Publication No. 2007-34224

PLT 4: Japanese Unexamined Patent Application Publication No. 2006-206414

EP 0 860 478 A1 describes treating metal oxide fine particles having a specific surface area of 5 to 500 $m^2/g$ with a silane coupling agent and then further treating the fine particles with a reactive group-terminated organopolysiloxane.

WO 2006/045012 A2 describes a method of preparing hydrophobic silica particles comprising (a) providing an aqueous colloidal silica dispersion comprising about 5-70 wt.% of silica particles having an average overall particle size of about 10-1000 nm, wherein the silica particles comprise surface silanol groups, (b) combining the silica dispersion with about 3-75 $\mu$mole/m$^2$ (based on the BET surface area of the silica) of a silyl amine treating agent and optionally with other ingredients to provide a reaction mixture, wherein the reaction mixture has a pH of about 7 or more, and comprises no more than about 50 wt.% of an organic solvent, and (c) drying the dispersion to provide hydrophobic silica particles.

US 5 900 315 A describes a charge-modified metal oxide including a metal oxide treated with a cyclic silazane and optionally a second treating agent for imparting hydrophobicity.

EP 1 502 933 A2 describes hydrophobic inorganic fine particles characterized by being a mixture of at least small-particle-diameter inorganic fine particles having an average primary particle diameter of 5 to 25 nm and having a maximum peak particle diameter of 20 nm or less and large-particle-diameter inorganic fine particles having an average primary particle diameter which is 1.5 to 100 times the average primary particle diameter of the small-particle-diameter inorganic fine particles.

EP 1 204 006 A1 describes an external additive for a toner, which has an average particle diameter not greater than 100 nm and includes an inorganic particulate material, wherein a hydrophobizing agent is present on the inorganic particulate material.

It is an object of the present invention to provide silica microparticles which have a suitable fine primary particle size as an external toner additive, the microparticles including no bulky agglomerated particles and being able to reduce detachment from the toner.

It is another object of the present invention to provide composition for electrophotographic toner utilizing these silica microparticles.

Summary of Invention

As a result of intensive research to solve the above problem, the present inventors have found that hydrophobic silica microparticles can be produced by controlling an average primary particle size of gas phase method silica microparticles, and by adjusting a ratio of the agglomerated particles of the hydrophobic silica microparticles to all hydrophobic silica microparticles produced by specific hydrophobization for the above gas phase method silica microparticles, the microparticles having no problem of detachment from toner, having superior efficiency in imparting uniform dispersibility into toner and fluidity, and preventing a white point from occurring on a printed image, and the microparticles being suitable as an external toner additive. Then, the inventors have completed the present invention.

Hydrophobic silica microparticles according to the present invention are obtainable by hydrophobization of hydrophilic silica microparticles having an average primary particle size of 30 to 100 nm produced by a gas phase method, wherein (1) hexamethyl disilazane or (2) organo-polysiloxane is used for the hydrophobization and sprayed under nitrogen atmosphere, the organo-polysiloxane (2) being represented by general formula (I):

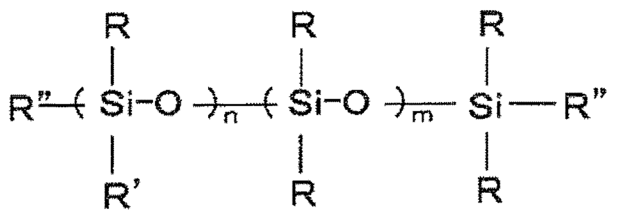

··· (I)

wherein R and R' represent hydrogen, alkyl having a carbon number of 1 to 3, or aryl;
R" represents alkyl having a carbon number of 1 to 3 or hydroxyl, or represents a bond which forms cyclic siloxane by representing one oxygen atom together with both R"s;
n and m each represent an integer of 0 or more where the total of n and m is 2 or more;
R' is different from R, and R' and R", or R and R" may be the same or different; and
five Rs refer to the same R, and two R"s may be the same or different, and

wherein the content of agglomerated particles having a particle size of 1.5 $\mu$m or more to all hydrophobic silica microparticles is less than 8 % when hexamethyl disilazane (1) is used for the hydrophobization, and is less than 12 % when the organo-polysiloxane (2) is used for the hydrophobization, the particle size being determined by a volume-based particle size measurement using laser diffractometry.

Composition for electrophotographic toner includes hydrophobic silica microparticles according to the present invention, wherein the microparticles are externally added to the composition.

Hydrophobic silica microparticles of the present invention are produced using hexamethyl disilazane or organo-polysiloxane represented by general formula (I) (hereinafter, also referred to as organo-polysiloxane (I)) by hydrophobization of hydrophilic silica microparticles having an average primary particle size of 30 to 100 nm, i.e., the hydrophilic silica microparticles include very fine primary particles, produced by a gas phase method, and a ratio of agglomerated particles having a particle size of 1.5 μm or more to all hydrophobic silica microparticles is less than a predetermined value determined by a volume-based particle size measurement using laser diffractometry. The hexamethyl disilazane or organo-polysiloxane is sprayed under nitrogen atmosphere. In addition, the microparticles hardly include bulky agglomerated particles. These silica microparticles have superior uniform dispersibility into toner and can effectively exert an effect of improving intrinsic fluidity of the silica microparticles. In addition, since these silica microparticles do not detach from toner, the microparticles can prevent a white point on a printed image from occurring.

Hydrophobic silica microparticles of the present invention are extremely useful as silica microparticles which are added to powder-based materials such as powdered paint, electrophotographic toner, and cosmetics so as to improve fluidity, to prevent from caking, and to adjust electrostatic sensitivity, etc.

Composition for electrophotographic toner according to the present invention includes hydrophobic silica microparticles of the present invention, which is externally added, and the composition is superior in fluidity and does not readily cause an image defect such as an image with a white point.

Brief Description of the Drawings

Fig. 1 shows a particle size distribution of the silica microparticles of Comparative Example 4 by determining using laser diffractometry by a volume-based particle size measurement of the particle.

Fig. 2 shows a particle size distribution of the silica microparticles of Comparative Example 8 by determining using laser diffractometry by a volume-based particle size measurement of the particle.

Detailed Description

Hereinafter, embodiments of hydrophobic silica microparticles and composition for electrophotographic toner according to the present invention are illustrated in detail.

[Hydrophobic silica microparticles]

Hydrophobic silica microparticles according to the present invention are characterized in that the hydrophobic silica microparticles are produced using hexamethyl disilazane or organo-polysiloxane (I) by carrying out hydrophobization of hydrophilic silica microparticles having an average primary particle size of from 30 to 100 nm produced by a gas phase method, and that a ratio of agglomerated particles having a particle size of 1.5 μm or more is less than a predetermined value by determining using laser diffractometry by a volume-based particle size measurement of the particle. The hexamethyl disilazane or organo-polysiloxane is sprayed under nitrogen atmosphere.

<Hydrophilic silica microparticles produced by a gas phase method>

Hydrophilic silica microparticles produced by a gas phase method are referred to as dry method silica, examples of the manufacturing method may include, but are not limited to, methods utilizing a flame hydrolysis reaction of silicon compound, an oxidation reaction by a flame combustion method, or a combination thereof. Among them, gas phase method silica microparticles produced by the flame hydrolysis method are preferably used. Examples of preferable commercially available silica microparticles include "AEROSIL" manufactured by NIPPON AEROSIL CO., LTD., or Evonik Degussa Japan Co., Ltd., "CAB-O-SIL" manufactured by Cabot Corporation, "HDK" manufactured by WACKER ASAHIKASEI SILICONE CO., LTD., and "REOLOSEAL" manufactured by TOKUYAMA Corporation.

A method for manufacturing gas phase method silica microparticles by utilizing a flame hydrolysis method includes: feeding silicon compound gas such as silicon tetrachloride as a source material, together with an inert gas into a mixing chamber having a combustion burner; blending it with hydrogen and air to yield a mixed gas having a predetermined ratio; and combusting this mixed gas in a reaction chamber at 1,000 to 3,000°C to generate silica microparticles. The silica microparticles are collected with a filter after cooling. A detailed manufacturing method utilizing a flame hydrolysis method can be referred to in methods disclosed in the respective publications of German Patent No. 974,793, No. 974,974, and No. 909,339.

The flame combustion method includes: performing, in flame, combustion cracking of alkylsilane, alkoxysilane, and/or a portion of a hydrolysis condensation product thereof. That is, the alkylsilane, alkoxysilane, and/or the portion

of the hydrolysis condensation product thereof are heated and evaporated, and are made to be combined with an inert gas stream or to be sprayed. The resulting gas is fed into flame such as oxyhydrogen flame, and is made to be subjected to combustion cracking in this flame.

Examples of the silicon compound which is used as a source material for gas phase method silica microparticles include various inorganic silicon compounds and organic silicon compounds. The specific examples include inorganic silicon compounds such as silicon tetrachloride, silicon trichloride, and silicon dichloride, and organic silicon compounds such as siloxane, for example, hexamethyl cyclotrisiloxane, octamethyl cyclotetrasiloxane, decamethyl cyclopentasiloxane, hexamethyl disiloxane, and octamethyl trisiloxane, alkoxysilane such as methyltrimethoxy silane, tetramethoxy silane, ethyltrimethoxy silane, n-propyl trimethoxy silane, methyl tributoxy silane, diethyl dipropoxy silane, and trimethylbutoxy silane, tetramethyl silane, diethyl silane, hexamethyl disilazane, and oligomers or polymers thereof.

If needed, the silicon compound is purified by distillation, etc., and is then heated and evaporated. The resulting compound is combined with an inert gas stream such as a nitrogen gas stream, and the mixture can be fed into flame. The silicon compound may be atomized to be fed into flame. The flame can be oxyhydrogen flame. In order to form flame, a flammable gas such as a methane gas can be used as a supporting gas. As this supporting gas, any of the gas can be used unless the gas leaves residue, and there is no particular limitation.

Silica microparticles generated by hydrolysis or combustion cracking of the silicon compound can be collected by a known method such as a bag filter and Cyclone.

Such gas phase method silica microparticles can be used alone, or in a combination of two or more kinds.

<Average primary particle size>

In the present invention, hydrophilic silica microparticles which are obtained by a gas phase method and are subjected to hydrophobization have an average primary particle size of from 30 to 100 nm. When the average primary particle size of the hydrophilic silica microparticles is more than 100 nm, the dispersibility of the resulting hydrophobic silica microparticles into toner is poor, as well as the effect of improving fluidity is inferior. When the average primary particle size of the gas phase method silica microparticles is less than 20 nm, the microparticles are readily aggregated, so that they are not preferable because of a high percentage of the aggregated particles.

From an aspect of the effect of imparting fluidity, in particular, the average primary particle size of the hydrophilic silica microparticles is preferably 50 nm or less, and, for example, 45 nm or less.

Particularly, from a viewpoint of the percentage of the aggregated particles, the average primary particle size of the hydrophilic silica microparticles is 30 nm or more.

As described in the section of the following Examples, of note is that the average primary particle size of hydrophilic silica microparticles according to the present invention is determined by an observation with a transmission electron microscope.

<BET specific surface area>

BET specific surface area of hydrophilic silica microparticles produced by a gas phase method largely depends on the average primary particle size. The BET specific surface area of the hydrophilic silica microparticles which are subjected to hydrophobization is preferably 10 to 120 $m^2/g$, and further preferably 15 to 90 $m^2/g$. When the BET specific surface area of the hydrophilic silica microparticles is too small, the dispersibility of the resulting hydrophobic silica microparticles into toner is poor, as well as the effect of improving fluidity is inferior. The gas phase method silica microparticles having too large BET specific surface area is readily agglomerated after grinding, and is not preferable because the cohesion force is strong.

Particularly, from an aspect of the effect of imparting fluidity, the BET specific surface area of the hydrophilic silica microparticles is preferably 25 to 90 $m^2/g$.

As described in the section of the following Examples, The BET specific surface area of the hydrophilic silica microparticles according to the present invention is determined by a BET method.

<Hydrophobization>

Hydrophobic silica microparticles of the present invention are produced by subjecting hydrophilic silica microparticles having the above average primary particle size prepared by a gas phase method to hydrophobization by using hexamethyl disilazane or polysiloxane (I).

Examples of a method for hydrophobization of the silica microparticles include, for example, a method using a silane coupling agent and a silicone oil as disclosed in Japanese Patent No. 3229174, a method using organohalogen silane as disclosed in Japanese Examined Patent Application Publication No. 61-50882, a method using organopolysiloxane as disclosed in Japanese Examined Patent Application Publication No. 57-2641, a method using a siloxane

oligomer as disclosed in Japanese Unexamined Patent Application Publication No. 62-171913, and the like.

The silica microparticles which are subjected to hydrophobization by using hexamethyl disilazane have high hydrophobicity and a superior effect of imparting fluidity into toner. The silica microparticles which are subjected to hydrophobization by using organo-polysiloxane (I) have high hydrophobicity and a superior effect of imparting fluidity into toner, and further possesses an effect of cleaning the surface of a photoconductor drum by using organo-polysiloxane (I) which is adsorbed.

<Hydrophobization by using hexamethyl disilazane>

The hydrophobization by using hexamethyl disilazane is specifically carried out in the following.

First, 100 parts by weight of a gas phase method silica powder having an average primary particle size of from 30 to 100 nm are added to a reaction container, and 0.1 to 20 parts by weight of water and 0.5 to 30 parts by weight of hexamethyl disilazane are sprayed under nitrogen atmosphere. This reaction mixture is stirred at 50 to 250°C for 0.5 to 3 hours, and further stirred at 140 to 250°C for 0.5 to 3 hours under nitrogen airflow to dryness. hydrophobized silica microparticles are obtained by cooling this mixture.

The amount of water and hexamethyl disilazane used for hydrophobization of 100 parts by weight of the hydrophilic silica microparticles can preferably be an amount calculated by the following equation for the BET specific surface area of the hydrophilic silica microparticles to be subjected to hydrophobization.

Hexamethyl disilazane (parts by weight) = BET specific surface area of hydrophilic silica microparticles ($m^2/g$) / $H_A$, wherein $H_A$ is preferably 3 to 30, and particularly 5.

Water (parts by weight) = BET specific surface area of Hydrophilic silica microparticles ($m^2/g$) / W, wherein W is preferably 5 to 200, and particularly 18.

When usage of hexamethyl disilazane exceeds the above range, a product following hydrophobization accumulates more agglomerates. When the usage is less, the hydrophobicity sufficient as an external toner additive may not be imparted. In addition, if usage of water is large, the agglomerates accumulate more, so that further sufficient hydrophobicity cannot be obtained. When the usage of water is less, a reaction of hexamethyl disilazane with the surface of the silica insufficiently proceeds, and the sufficient hydrophobicity thus cannot be obtained.

Besides, hexamethyl disilazane and water each may be individually sprayed, or they may be each sprayed by diluting them into a solvent such as alcohol. In addition, they may be simultaneously sprayed by dissolving both hexamethyl disilazane and water into such a solvent.

In the present invention, due to hydrophobization by using such hexamethyl disilazane, the hydrophobicity factor of the silica microparticles is preferably 95% or more, and particularly preferably 97% or more determined by a method described in the section of the following Examples.

<Hydrophobization by using polysiloxane (I)>

Polysiloxane (I) of the present invention is represented by the following general formula (I):

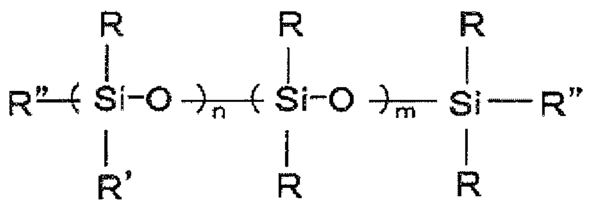

··· ( I )

In general formula (I), R and R' represent hydrogen, alkyl having a carbon number of 1 to 3, or aryl.

R" represents alkyl having a carbon number of 1 to 3 or hydroxyl, or represents a bond which forms cyclic siloxane by representing one oxygen atom together with both R"s. n and m each represent an integer of 0 or more where the total of n and m is 2 or more. In addition, R' is different from R, and R' and R", or R and R" may be the same or different. In the formula, five Rs refer to the same R, and two R"s may be the same or different.

In general formula (I), examples of aryl represented by R or R' include phenyl, toluyl, xylyl, naphthyl, and the like. Among them, phenyl is preferable.

Alkyl having a carbon number of 1 to 3 represented by R, R', or R" and aryl represented by R or R' may have one or two or more substituents. In this case, examples of the substituents include alkyl having a carbon number of 1 to 4, phenyl, toluyl, xylyl, naphthyl, and the like.

In particular, methyl, ethyl, or propyl is preferable as R.

In addition, hydrogen, methyl, or phenyl is particularly preferable as R'.

In addition, methyl or hydroxyl is particularly preferable as R".

n and m each represent an integer of 0 or more, and $n + m \geq 2$.

n is particularly preferably 0 to 800, and m is particularly preferable 0 to 1,000. The total of n and m is preferably 10 to 1,000.

In addition, the molecular weight of polysiloxane (I) is particularly preferably between 1,000 and 100,000.

In the present invention, polysiloxane (I) can be used alone, or two or more kinds of it can be blended to be used in any ratio.

Such hydrophobization by using organo-polysiloxane (I) can be specifically carried out as follows.

First, 100 parts by weight of gas phase method silica powder having an average primary particle size of 20 to 100 nm is added to a reaction container, and 0.5 to 30 parts by weight of organo-polysiloxane (I) are sprayed under nitrogen atmosphere. This reaction mixture is stirred under nitrogen airflow at 220 to 380°C for 0.5 to 3 hours, and organo-polysiloxane is then reacted with the surface of the silica microparticles. Then, hydrophobic silica microparticles can be obtained by cooling the mixture.

In such hydrophobization, the amount of organo-polysiloxane (I) used for hydrophobization of 100 parts by weight of the hydrophilic silica microparticles can be preferably an amount calculated by the following equation for the BET specific surface area of the hydrophilic silica microparticles to be subjected to hydrophobization.

Organo-Polysiloxane (I) (parts by weight) = BET specific surface area of hydrophilic silica microparticles ($m^2/g$) / $H_B$, wherein $H_B$ is preferably 2 to 20, and particularly 8.

When usage of organo-polysiloxane (I) exceeds the above range, a product following hydrophobization accumulates more agglomerates. When the usage is less, the hydrophobicity sufficient as an external toner additive may not be imparted.

Besides, organo-polysiloxane (I) can be sprayed alone to the hydrophilic silica microparticles. However, when the viscosity is high, organo-polysiloxane (I) can be dissolved in a volatile organic solvent such as hexane or toluene to have a concentration of about 1 to 90% by weight, and then may be sprayed.

In the present invention, due to hydrophobization by using such organo-polysiloxane (I), the hydrophobicity ratio of the silica microparticles is preferably 97% or more, and particularly 99% or more determined by a method described in the section of the following Examples.

<Ratio of agglomerated particles>

For hydrophobic silica microparticles produced by hydrophobization using hexamethyl disilazane according to the present invention, the ratio of agglomerated particles having a size of 1.5 μm or more (hereinafter also referred to as "laser diffractometry agglomerated particles ratio") is less than 8% determined using laser diffractometry by a volume-based particle size measurement of the particle. For example, a diffractometry chart obtained in the volume-based particle size measurement of the particles by laser diffractometry as shown in Fig. 1 demonstrates that the distribution ratio of the agglomerated particles having a size of 1.5 μm or more is less than 8%.

When this laser diffractometry agglomerated particles ratio is high, a large amount of the resulting large agglomerated particles causes poor uniform dispersibility into toner, and fails to yield better fluidity and better quality of printed images with less white points. The lower laser diffractometry agglomerated particles ratio is preferable, and the ratio is particularly 6% or less, and most preferably 3% or less.

In contrast, for hydrophobic silica microparticles produced by hydrophobization using polysiloxane (I), the ratio of agglomerated particles having a size of 1.5 μm or more is less than 12% determined using laser diffractometry by a volume-based particle size measurement of the particle. For example, a diffractometry chart obtained in the volume-based particle size measurement of the particles by laser diffractometry as shown in Fig. 2 demonstrates that the distribution ratio of the agglomerated particles having a size of 1.5 μm or more is less than 12%.

When this laser diffractometry agglomerated particles ratio is high, a larger amount of the resulting large agglomerated particles causes poor uniform dispersibility into toner, and fails to yield better fluidity and better quality of printed images with less white points. The lower laser diffractometry agglomerated particles ratio is preferable, and the ratio is preferably 10% or less, particularly 8% or less, and most preferably 5% or less.

Of note is that this laser diffractometry agglomerated particles ratio is determined for an ethanol dispersion including the silica microparticles by using a laser diffraction-type particle size distribution counter "LA920" manufactured by Horiba, Ltd., as described in the section of the following Examples.

Hydrophobic silica microparticles having the above laser diffractometry agglomerated particles size according to the present invention can be produced by the method including: performing hydrophobization, using hexamethyl disilazane or polysiloxane (I), of the hydrophilic silica microparticles manufactured by the foregoing gas phase method; subsequently grinding the microparticles with a mill such as a pin mill or a jet mill; collecting only fine particles by performing classification using airflow-type classification; and optionally repeating this grinding and classification.

At this occasion, the crude particles separated by the classification are preferably recycled into the grinding

step from a view point of the efficiency of the steps.

For use of a mill having mechanism of simultaneously performing the classification and grinding or a mill in which the classification step is built-in and for the case where the classification is considered insufficient, another classification device is placed in the mill, so that a high-level classification step can be preferably carried out.

The above hydrophobization causes agglomeration of the silica microparticles. Accordingly, the hydrophobization should be carried out prior to this grinding·classification process, and the grinding·classification process described above can be performed after the hydrophobization.

[Composition for electrophotographic toner]

Composition for electrophotographic toner according to the present invention is those to which the above hydrophobic silica microparticles of the present invention are externally added. The component and manufacturing method thereof do not have a particular limitation, and can employ known component and methods.

The composition for electrophotographic toner preferably contains 0.1 to 6.0% by weight of the hydrophobic silica microparticles of the present invention. When the content of the hydrophobic silica microparticles in composition for electrophotographic toner according to the present invention is less than 0.1% by weight, an effect of improving fluidity and an effect of stabilizing electrostatic sensitivity resulting from the addition of these silica microparticles cannot be sufficiently achieved. In addition, when the content of the silica microparticles exceeds 6.0% by weight, many of the silica microparticles can detach from the surface of the toner, and perform alone, which results in a problem with images and cleaning resistance.

The content S (% by weight) of the hydrophobic silica microparticles of the present invention as included in composition for electrophotographic toner depends on an average particle size of the toner particles. For example, recently, toner particles having an average size of 5 to 9 $\mu$m have been generally used. These toner particles preferably have a size of $r/40 \leq S \leq r/7$, and particularly preferably have a value of $S = r/20$ for an average primary particle size, r (nm), of the hydrophilic silica microparticles which has been used for the manufacture of the hydrophobic silica microparticles.

Toner generally includes a thermoplastic resin, a small amount of pigment, a charge-controlling agent, and other externally added agents. In the present invention, if the above silica microparticles are formulated, other components can utilize conventional microparticles. The toner may be either one-component toner including one of magnetic and non-magnetic components, or two-component toner. In addition, the toner may be either negatively charged toner or positively charged toner, and it may be either monochrome toner or color toner.

For composition for electrophotographic toner according to the present invention, only hydrophobic silica microparticles of the present invention can be externally added, and, further, another metal oxide microparticles can be externally added. The above silica microparticles can be used to combine with microparticles whose surfaces are modified, the microparticles being, for example, additional dry silica microparticles, dry titanium oxide microparticles, and wet titanium oxide microparticles.

EXAMPLES

Hereinafter, the present invention is more specifically described by referring to Examples and Comparative Examples.

Besides, the estimation procedure for silica microparticles and toner composition in the following Examples and Comparative Examples is as follows.

[Estimation of silica microparticles]

<Average primary particle size>

An average primary particle size was calculated measuring a particle size of 2,500 or more particles randomly selected from silica microparticles by analyzing images obtained with a transmission electron microscope, followed by the total particle size divided by the number of particles.

<BET specific surface area>

BET specific surface area was determined by a BET method.

<Laser diffractometry agglomerated particles ratio>

A determination of the agglomerated particles ratio was conducted with a laser diffraction-type particle size distribution counter, "LA920", manufactured by Horiba, Ltd. Ethanol was used for a solvent for measurement. About 0.2 g of hydrophobic silica microparticles was used, and was subjected to measurement according to a standard protocol for the device. The sample particles were made to disperse by performing sonication having a power of 30 W for 5 minutes as measurement pretreatment. The ratio of agglomerated particles having a particle size of 1.5 μm or more was determined by the measured results of a volume average particle size shown in Figure 1.

<Hydrophobicity factor>

First, 1 g of hydrophobic silica microparticles was weighed and placed in a 200-mL separating funnel, and 100 mL of pure water was added thereto. A lid was put on, and the mixture was shaken with a turbular mixer for 10 minutes. After shake, the mixture was placed without shaking for 10 minutes. After placed without shaking, 20 to 30 mL of a lower layer was removed from the funnel. Then, the mixture of the lower layer was fractionated into a 10-mm quartz cell. The sample was placed in a colorimeter using pure water as a blank. Light transmittance at a wavelength of 500 nm was measured and designated as a hydrophobicity factor.

[Evaluation of toner composition]

<Repose angle>

A repose angle of toner composition was determined with Powder Tester PT-S (manufactured by Hosokawa Micron Corporation). About 20 g of toner particles (sample) was put on a sieve having a sieve mesh size of 355 μm. The toner sample which was fallen by vibration was made to pass through a funnel. The sample was heaped on a round table having a diameter of 8 cm, the table being placed about 6.5 cm below the tip of the funnel. The heaped toner sample was formed in a cone shape, and the side angle to a horizontal surface of the sample was referred to as a repose angle.

As the measured repose angle of the toner composition becomes smaller, the aggregated particles in the silica microparticles become smaller and have superior fluidity.

In Examples of the present application, when the repose angle is 41° or less, it was determined as a pass. When the angle is 39 degree or less, it was determined as better.

<Evaluation procedure I for white point-containing image>

Toner composition was filled in a commercially available copier, and solid images having a 3-cm square were printed by continuously feeding 1,000 papers. Next, the number of white points having a diameter of 0.1 mm or more which appeared on the images was counted. Then, the average number per paper was calculated. Finally, when the average number of this white point per image was 4 or less, it was determined as a pass.

<Evaluation procedure II for white point-containing image>

Toner composition was filled in a commercially available copier, and 10 solid images having a 3-cm square per paper were printed by continuously feeding 1,000 A4 copy papers. Next, the number of white points having a diameter of 0.2 mm or more which appeared on the 1,000th paper was counted. Then, the average number per image was calculated. Finally, in the present Examples, when the average number of this white point per image was 2 or less, it was determined as a pass.

[EXAMPLE 1]

AEROSIL®90, a product name, manufactured by NIPPON AEROSIL CO., Ltd. (BET specific surface area: 90 $m^2/g$; average primary particle size: 20 nm) was used as gas phase method silica microparticles. This gas phase method silica microparticles were subjected to hydrophobization under the following conditions, and then were further subjected to grinding and classification under the following conditions. After that, silica microparticles having the average primary particle size and the laser diffractometry aggregated particles ratio shown in Table 1 was obtained.

<Hydrophobization>

To a reaction container were added 100 parts by weight of gas phase method silica microparticles, and 5 parts by weight of water and 18 parts by weight of hexamethyl disilazane were sprayed under nitrogen atmosphere. This reaction mixture was stirred at 150°C for 2 hours, and further stirred at 220°C for 2 hours under nitrogen airflow to dryness. The mixture was cooled to yield hydrophobized silica microparticles.

<Grinding classification process>

The grinding classification process was conducted using a counter jet mill (manufactured by Hosokawa Micron Corporation) as a mill and Turboplex1000 ATP (manufactured by Hosokawa Micron Corporation) as a classification device. The separated crude powders were made to pass through a pipe, were continuously recycled into the jet mill, and were subjected again to the grinding·classification process.

For the resulting hydrophobized and lower-level aggregated silica microparticles, the aggregated particles ratio and the hydrophobicity factor were determined. The results were shown in Table 1.

In addition, toner composition was prepared using these silica microparticles in the following formulation. Estimation was performed, and the results were shown in Table 1.

<Preparation of toner composition>

Two-component toner including a negatively charged styrene-acryl resin having an average particle size of 8 μm which had been manufactured by a grinding method was used. The toner was blended to have the following ratio of the formulation amount of the silica microparticles to 100 parts by weight total of this toner and the silica microparticles.

Formulation amount of Silica microparticles (parts by weight) = Average primary particle size of hydrophilic silica microparticles (nm) / 20.

The above mixture was added to a Henschel-type mixer, and was stirred for 1 minute at 600 rpm, followed by further 3-min stirring at 3,000 rpm, which resulted in dispersion of the silica microparticles on the surface of the toner to prepare toner composition.

[EXAMPLES 2 to 4, COMPARATIVE EXAMPLES 1 to 4]

The microparticles in Example 1 as shown in Table 1 were employed as gas phase method silica microparticles. Hydrophobized classified silica microparticles were produced by changing the conditions regarding hydrophobization and grinding classification conditions. These silica microparticles were used to prepare toner composition in a similar manner.

Besides, the usage of hexamethyl disilazane and water per 100 parts by weight of the silica microparticles used for hydrophobization were an amount calculated by the following equation depending on the BET specific surface area of the silica microparticles that had been subjected to hydrophobization.

Hexamethyl disilazane (parts by weight) = BET specific surface area of hydrophilic silica microparticles ($m^2/g$) / 5.

Water (parts by weight) = BET specific surface area of hydrophilic silica microparticles ($m^2/g$) / 18.

The estimation results of the resulting silica microparticles and the toner composition were shown in Table 1.

The particle size distribution of the resulting hydrophobized classified silica microparticles as obtained in Comparative Example 4 was determined using laser diffractometry by a volume-based particle size measurement, and the

results were shown in Fig. 1.

[Table 1]

| | | *Example 1 | Example 2 | Example 3 | Example 4 | Comparative Example 1 | Comparative Example 2 | Comparative Example 3 | Comparative Example 4 |
|---|---|---|---|---|---|---|---|---|---|
| Estimation of Silica Microparticles 1) | Average Primary Particle Size of Hydrophilic Silica Microparticles (nm) | 20 | 30 | 40 | 70 | 16 | 120 | 120 | 30 |
| | BET Specific Surface Area of Hydrophilic Silica Microparticles ($m^2/g$) | 90 | 50 | 50 | 25 | 130 | 15 | 15 | 50 |
| | Laser Diffraction Aggregated Particles Ratio of Hydrophobic Silica Microparticles (%) | 5.5 | 2.6 | 1.4 | 0.6 | 18 | 0.3 | 10 | 20 |
| | Hydrophobicity of Hydrophobic Silica Microparticles (%) | 99 | 99 | 99 | 98 | 99 | 94 | 93 | 98 |
| Estimation of Toner Composition | Repose Angle (°) | 32 | 32 | 35 | 38 | 33 | 46 | 47 | 37 |
| | Average Number of White Points per Image (Evaluation Procedure I) (Number) | 2.0 | 1.4 | <1 | <1 | 6.3 | <1 | 3.3 | 14.9 |

1) Gas phase method hydrophilic silica microparticles which have been subjected to hydrophobization are as follows:

Example 1: AEROSIL®90, a product name, manufactured by NIPPON AEROSIL CO., Ltd. (BET specific surface area: $90m^2/g$; average primary particle size 20 nm); * Reference Example (not in accordance with the present invention);

Example 2: and Comparative Example 4: AEROSIL ®50, a product name, manufactured by NIPPON AEROSIL CO., Ltd. (BET specific surface area 50 $m^2/g$; average primary particle size: 30 nm);

Example 3: AEROSIL®OX50, a product name, manufactured by NIPPON AEROSOL CO., Ltd (BET specific surface area: $50m^2/g$; average primary particle size: 40 nm);

Example 4: Prototype (BET specific surface area: 25 $m^2/g$; average primary particle size: 70nm);

Comparative Example 1: AEROSIL®130, a product name, manufactured by NIPPON AEROSIL CO., Ltd. (BET specific surface area: 130 $m^2/g$; average primary particle size: 16 nm);

Comparative Examples 2 and 3: Prototype (BET specific surface area: $15m^2/g$; average primary particle size: 120 nm).

[EXAMPLE 5]

AEROSIL®90, a product name, manufactured by NIPPON AEROSIL CO., Ltd. (BET specific surface area: 90 $m^2/g$; average primary particle size: 20 nm) was used as gas phase method silica microparticles. These gas phase method silica microparticles were subjected to hydrophobization under the following conditions, and then were further subjected to grinding and classification under the following conditions. After that, silica microparticles having the average primary particle size and the laser diffractometry aggregated particles ratio shown in Table 2 were obtained.

<Hydrophobization>

To a reaction container were added 100 parts by weight of gas phase method silica microparticles, and 11 parts by weight of the following polysiloxane (I) were sprayed under nitrogen atmosphere. This reaction mixture was stirred at 280°C for 1 hour under nitrogen airflow. The mixture was cooled to yield hydrophobic silica microparticles.

Polysiloxane (I): In general formula (I), R = methyl, R' = methyl, R" = methyl, n = 0, m = 80, and the molecular weight was about 5,900.

<Grinding classification process>

The grinding classification process was conducted using a counter jet mill (manufactured by Hosokawa Micron Corporation) as a mill and Turboplex1000 ATP (manufactured by Hosokawa Micron Corporation) as a classification device. The separated crude powder was made to pass through a pipe, was continuously recycled into the jet mill, and was subjected again to the grinding·classification process.

For the resulting hydrophobized and lower-level aggregated silica microparticles, the aggregated particles ratio and the hydrophobicity factor were determined. The results were shown in Table 2.

In addition, toner composition was prepared using these silica microparticles in the following formulation. Estimation was performed, and the results were shown in Table 2.

<Preparation of toner composition>

Two-component toner microparticles including a negatively charged styrene-acryl resin having an average particle size of 8 μm which had been manufactured by a grinding method were used. The toner microparticles were blended to have the following ratio of the formulation amount of the silica microparticles to 100 parts by weight total of these toner microparticles and the silica microparticles.

Formulation amount of silica microparticles (parts by weight) = Average primary particle size of hydrophilic silica microparticles (nm) / 20.

The above mixture was added to a Henschel-type mixer, and was stirred for 1 minute at 600 rpm, followed by further 3-min stirring at 3,000 rpm, which resulted in dispersion of the silica microparticles on the surface of the toner microparticles to prepare toner composition.

[EXAMPLES 6 to 8, COMPARATIVE EXAMPLES 5 to 8]

The microparticles in Example 5 as shown in Table 2 were employed as gas phase method silica microparticles. Hydrophobized classified silica microparticles were produced by changing the conditions regarding hydrophobization and grinding classification conditions. These silica microparticles were used to prepare toner composition in a similar manner.

Besides, the usage of polysiloxane (I) per 100 parts by weight of the silica microparticles used for hydrophobization was an amount calculated by the following equation depending on the BET specific surface area of the silica microparticles that had been subjected to hydrophobization.

Polysiloxane (I) (parts by weight) = BET specific surface area of hydrophilic silica microparticles ($m^2/g$) / 8.

The estimation results of the resulting silica microparticles and the toner composition were shown in Table 2.

In addition, the particle size distribution of the resulting hydrophobized classified silica microparticles as obtained in Comparative Example 8 was determined using laser diffractometry by a volume-based particle size measurement, and the results were shown in Fig. 2.

[Table 2]

| | | *Example 5 | Example 6 | Example 7 | Example 8 | Comparative Example 5 | Comparative Example 6 | Comparative Example 7 | Comparative Example 8 |
|---|---|---|---|---|---|---|---|---|---|
| Estimation of Silica Microparticles 1) | Average Primary Particle Size of Hydrophilic Silica Microparticles (nm) | 20 | 30 | 40 | 70 | 16 | 120 | 120 | 30 |
| | BET Specific Surface Area of Hydrophilic Silica Microparticles ($m^2/g$) | 90 | 50 | 50 | 25 | 130 | 15 | 15 | 50 |
| | Laser Diffraction Aggregated Particles Ratio of Hydrophobic Silica Microparticles (%) | 9.6 | 8.1 | 7.0 | 10 | 19 | 10 | 16 | 14 |
| | Hydrophobicity of Hydrophobic Silica Microparticles (%) | 99.6 | 99.1 | 99.4 | 99.5 | 99.3 | 99.3 | 99.4 | 99.9 |
| Estimation of Toner Composition | Repose Angle (°) | 36 | 37 | 38 | 41 | 34 | 45 | 47 | 37 |
| | Average Number of White Points per Image (Evaluation Procedure II) | 0.4 | 0.6 | 1.3 | 0.9 | 8.9 | 1.1 | 7.3 | 4.0 |

1) Gas phase method hydrophilic silica microparticles which have been subjected to hydrophobization are as follows:

Example 5: AEROSIL®90, a product name, manufactured by NIPPON AEROSIL CO., Ltd. (BET specific surface area: $90m^2/g$; average primary particle size 20 nm); * Reference Example (not in accordance with the present invention);

Example 6: and Comparative Example 8: AEROSIL ®50, a product name, manufactured by NIPPON AEROSIL CO., Ltd. (BET specific surface area 50 $m^2/g$; average primary particle size: 30 nm);

Example 7: AEROSIL®OX50, a product name, manufactured by NIPPON AEROSOL CO., Ltd (BET specific surface area: $50m^2/g$; average primary particle size: 40 nm);

Comparative Example 5: AEROSIL®130, a product name, manufactured by NIPPON AEROSIL CO., Ltd. (BET specific surface area: 130 $m^2/g$; average primary particle size: 16 nm);

Comparative Examples 6 and 7: Prototype (BET specific surface area: $15m^2/g$; average primary particle size: 120 nm).

In view of Tables 1 and 2, the present invention is found to enable toner composition having better fluidity and high image quality to be realized, the toner composition including silica microparticles having a small amount of small aggregated particles, a superior uniform dispersibility into toner, and a uniform particle size.

## Claims

**1.** Hydrophobic silica microparticles obtainable by hydrophobization of hydrophilic silica microparticles having an average primary particle size of 30 to 100 nm produced by a gas phase method,
wherein (1) hexamethyl disilazane or (2) organo-polysiloxane is used for the hydrophobization and sprayed under nitrogen atmosphere, the organo-polysiloxane (2) being represented by general formula (I):

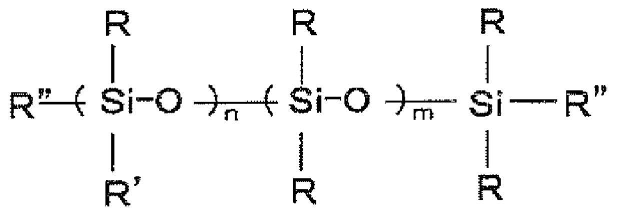

··· (I)

wherein R and R' represent hydrogen, alkyl having a carbon number of 1 to 3, or aryl;
R" represents alkyl having a carbon number of 1 to 3 or hydroxyl, or represents a bond which forms cyclic siloxane by representing one oxygen atom together with both R"s;
n and m each represent an integer of 0 or more where the total of n and m is 2 or more;
R' is different from R, and R' and R", or R and R" may be the same or different; and
five Rs refer to the same R, and two R"s may be the same or different, and

wherein the content of agglomerated particles having a particle size of 1.5 μm or more to all hydrophobic silica microparticles is less than 8 % when hexamethyl disilazane (1) is used for the hydrophobization, and is less than 12 % when the organo-polysiloxane (2) is used for the hydrophobization, the particle size being determined by a volume-based particle size measurement using laser diffractometry.

**2.** The hydrophobic silica microparticles according to Claim 1, wherein the average primary particle size of the hydrophilic silica microparticles is 50 nm or less.

**3.** The hydrophobic silica microparticles according to Claim 1 or 2, wherein when hexamethyl disilazane (1) is used for the hydrophobization, the hydrophobicity factor of the hydrophobic silica particles is 95 % or more, the hydrophobicity factor being determined by charging 1 g of the hydrophobic silica microparticles in a 200-ml separating funnel, adding 100 ml of pure water thereto, shaking the resulting mixture with a turbular mixer for 10 minutes and placing the mixture without shaking for 10 minutes, before removing 20 to 30 ml of a lower layer from the funnel, fractionating the mixture of the lower layer into a 10-mm quartz cell, and placing the sample into a colorimeter, wherein the light transmittance is measured at a wavelength of 500 nm using pure water as a blank, and said light transmittance is designated as the hydrophobicity factor.

**4.** The hydrophobic silica microparticles according to Claim 1 or 2, wherein when the organo-polysiloxane (2) is used for the hydrophobization, the hydrophobicity factor of the hydrophobic silica particles is 97 % or more, the hydrophobicity factor being determined as defined in Claim 3.

**5.** A toner comprising the hydrophobic silica microparticles as defined in any of Claims 1 to 4.

**6.** Composition for electrophotographic toner, comprising hydrophobic silica microparticles according to any one of Claims 1 to 4, wherein the microparticles are externally added to the composition.

**7.** The hydrophobic silica microparticles according to any one of Claims 1 to 4, wherein the hydrophobic silica microparticles are produced by a method including: performing hydrophobization, using hexamethyl disilazane or polysiloxane (I), of the hydrophilic silica microparticles manufactured by a gas phase method; subsequently grinding the microparticles with a mill; collecting only fine particles by performing classification; and optionally repeating this grinding and classification.

**Patentansprüche**

**1.** Hydrophobe Silikamikropartikel, erhältlich durch Hydrophobisierung von hydrophilen Silikamikropartikeln mit einer durchschnittlichen Primärpartikelgröße von 30 bis 100 nm, hergestellt durch ein Gasphasenverfahren,
wobei (1) Hexamethyldisilazan oder (2) Organo-Polysiloxan zur Hydrophobisierung verwendet wird und unter einer Stickstoffatmosphäre versprüht wird, wobei das Organo-Polysiloxan (2) durch die allgemeine Formel (I) dargestellt ist:

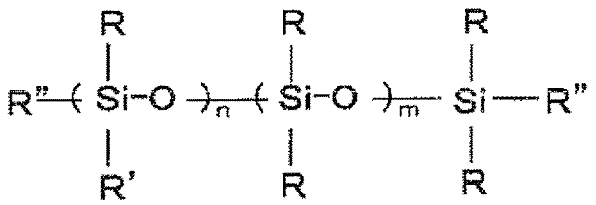

··· ( I )

worin R und R' Wasserstoff, Alkyl mit einer Kohlenstoffzahl von 1 bis 3 oder Aryl darstellen,
R" Alkyl mit einer Kohlenstoffzahl von 1 bis 3 oder Hydroxyl darstellt oder eine Bindung darstellt, die cyclisches Siloxan bildet, indem es ein Sauerstoffatom zusammen mit zwei R" darstellt,
n und m jeweils eine ganze Zahl von 0 oder größer darstellen, wobei n und m insgesamt 2 oder größer ist,
R' von R verschieden ist und R' und R" oder R und R" gleich oder verschieden sein können und
fünf R dasselbe R bezeichnen und zwei R" gleich oder verschieden sein können und
wobei der Gehalt an agglomerierten Partikeln mit einer Partikelgröße von 1,5 μm oder mehr, bezogen auf alle hydrophoben Silikamikropartikel, weniger als 8 % beträgt, wenn Hexamethyldisilazan (1) zur Hydrophobisierung verwendet wird, und weniger als 12 % beträgt, wenn das Organo-Polysiloxan (2) zur Hydrophobisierung verwendet wird, wobei die Partikelgröße durch eine volumenbasierte Partikelgrößenmessung unter Verwendung von Laserdiffraktometrie bestimmt wird.

**2.** Hydrophobe Silikamikropartikel gemäß Anspruch 1, wobei die durchschnittliche Primärpartikelgröße der hydrophoben Silikamikropartikel 50 nm oder weniger beträgt.

3. Hydrophobe Silikamikropartikel gemäß Anspruch 1 oder 2, wobei, wenn Hexamethyldisilazan (1) zur Hydrophobisierung verwendet wird, der Hydrophobizitätsfaktor der hydrophoben Silikapartikel 95 % oder mehr beträgt, wobei der Hydrophobizitätsfaktor durch Einfüllen von 1 g der hydrophoben Silikamikropartikel in einen 200 ml-Scheidetrichter, Zugeben von 100 ml reinem Wasser, Schütteln der resultierenden Mischung mit einem Turbular-Mischer für 10 Minuten und Platzieren der Mischung ohne Schütteln für 10 Minuten, bevor 20 bis 30 ml der unteren Schicht aus dem Trichter entfernt werden, Fraktionieren der Mischung der unteren Schicht in eine 10 nm Quarzzelle und Platzieren der Probe in ein Kolorimeter bestimmt wird, wobei die Lichtdurchlässigkeit bei einer Wellenlänge von 500 nm unter Verwendung von reinem Wasser als Blindprobe gemessen wird und die Lichtdurchlässigkeit als Hydrophobizitätsfaktor bezeichnet wird.

4. Hydrophobe Silikamikropartikel gemäß Anspruch 1 oder 2, wobei, wenn das Organo-Polysiloxan (2) zur Hydrophobisierung verwendet, der Hydrophobizitätsfaktor der hydrophoben Silikapartikel 97 % oder mehr beträgt, wobei der Hydrophobizitätsfaktor wie in Anspruch 3 definiert bestimmt wird.

5. Toner, umfassend die hydrophoben Silikamikropartikel wie in irgendeinem der Anspruche 1 bis 4 definiert.

6. Zusammensetzung für einen elektrophotographischen Toner, umfassend hydrophobe Silikamikropartikel gemäß einem der Ansprüche 1 bis 4, wobei die Mikropartikel von außen zu der Zusammensetzung hinzugefügt werden.

7. Hydrophobe Silikamikropartikel gemäß irgendeinem der Ansprüche 1 bis 4, wobei die hydrophoben Silikamikropartikel durch ein Verfahren einschließlich Durchführung einer Hydrophobisierung unter Verwendung von Hexamethyldisilazan oder Polysiloxan (I) der hydrophilen Silikamikropartikel, die durch ein Gasphasenverfahren hergestellt wurden, anschließendem Mahlen der Mikropartikel mit einer Mühle, Sammeln von lediglich feinen Partikeln mittels Durchführung einer Klassierung und gegebenenfalls Wiederholen des Mahlens und der Klassierung hergestellt werden.

**Revendications**

1. Microparticules de silice hydrophobe pouvant être obtenues par hydrophobisation de microparticules de silice hydrophile ayant une taille de particule primaire moyenne de 30 à 100 nm produites par un procédé en phase gazeuse, dans lesquelles (1) de l'hexaméthyldisilazane ou (2) de l'organopolysiloxane est utilisé pour l'hydrophobisation et pulvérisé sous atmosphère d'azote, l'organopolysiloxane (2) étant représenté par la formule générale (I) :

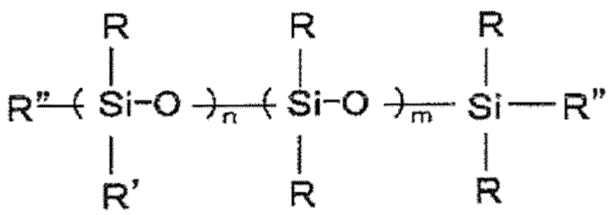

··· ( I )

où R et R' représentent de l'hydrogène, un alkyle ayant un nombre de carbone de 1 à 3, ou un aryle ;
R" représente un alkyle ayant un nombre de carbone de 1 à 3 ou un hydroxyle, ou représente une liaison qui forme un siloxane cyclique en représentant un atome d'oxygène avec les deux R" ;
n et m représentent chacun un entier de 0 ou plus où le total de n et m est de 2 ou plus ;
R' est différent de R, et R' et R", ou R et R" peuvent être identiques ou différents ; et
cinq R désignent le même R, et deux R" peuvent être identiques ou différents, et dans lesquelles la teneur en particules agglomérées ayant une taille de particule de 1,5 μm ou plus pour toutes les microparticules de silice hydrophobe est inférieure à 8 % lorsque l'hexaméthyldisilazane (1) est utilisé pour l'hydrophobisation, et est inférieure à 12 % lorsque l'organopolysiloxane (2) est utilisé pour l'hydrophobisation, la taille de particule étant déterminée par une mesure de taille de particule à base de volume par diffractométrie laser.

2. Microparticules de silice hydrophobe selon la revendication 1, dans lesquelles la taille de particule primaire moyenne des microparticules de silice hydrophile est de 50 nm ou moins.

3. Microparticules de silice hydrophobe selon la revendication 1 ou 2, dans lesquelles lorsque l'hexaméthyldisilazane (1) est utilisé pour l'hydrophobisation, le facteur d'hydrophobicité des particules de silice hydrophobe est de 95%

ou plus, le facteur d'hydrophobicité étant déterminé en chargeant 1 g des microparticules de silice hydrophobe dans un entonnoir de séparation de 200 ml, en y ajoutant 100 ml d'eau pure, en secouant le mélange résultant avec un mélangeur tubulaire pendant 10 minutes et en plaçant le mélange sans secouer pendant 10 minutes, avant de retirer 20 à 30 ml d'une couche inférieure de l'entonnoir, en fractionnant le mélange de la couche inférieure en une cellule en quartz de 10 mm, et en plaçant l'échantillon dans un colorimètre, dans lesquelles la transmittance de lumière est mesurée à une longueur d'onde de 500 nm en utilisant de l'eau pure en tant que témoin, et ladite transmittance lumineuse est désignée en tant que facteur d'hydrophobicité.

**4.** Microparticules de silice hydrophobe selon la revendication 1 ou 2, dans lesquelles lorsque l'organopolysiloxane (2) est utilisé pour l'hydrophobisation, le facteur d'hydrophobicité des particules de silice hydrophobe est de 97 % ou plus, le facteur d'hydrophobicité étant déterminé comme défini dans la revendication 3.

**5.** Toner comprenant les microparticules de silice hydrophobe telles que définies dans l'une quelconque des revendications 1 à 4.

**6.** Composition pour toner électrophotographique, comprenant des microparticules de silice hydrophobe selon l'une quelconque des revendications 1 à 4, dans laquelle les microparticules sont ajoutées extérieurement à la composition.

**7.** Microparticules de silice hydrophobe selon l'une quelconque des revendications 1 à 4, dans lesquelles les microparticules de silice hydrophobe sont produites par un procédé incluant les étapes consistant à :
effectuer une hydrophobisation, en utilisant de l'hexaméthyldisilazane ou du polysiloxane (I), des microparticules de silice hydrophile fabriquées par un procédé en phase gazeuse; broyer ensuite les microparticules avec un broyeur; recueillir uniquement des particules fines en effectuant une classification ; et facultativement répéter ce broyage et cette classification.

Fig. 1

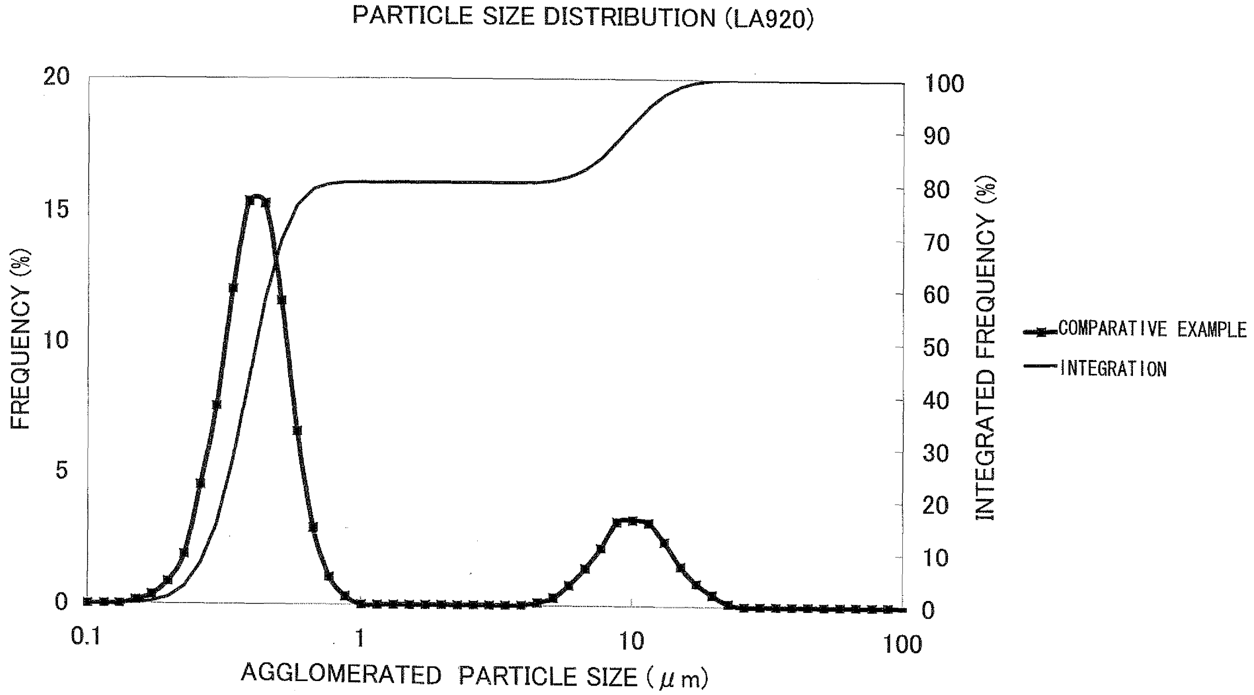
PARTICLE SIZE DISTRIBUTION (LA920)
FREQUENCY (%)
INTEGRATED FREQUENCY (%)
AGGLOMERATED PARTICLE SIZE (μm)
COMPARATIVE EXAMPLE
INTEGRATION
0
5
10
15
20
0.1
1
10
100
0
10
20
30
40
50
60
70
80
90
100

Fig. 2

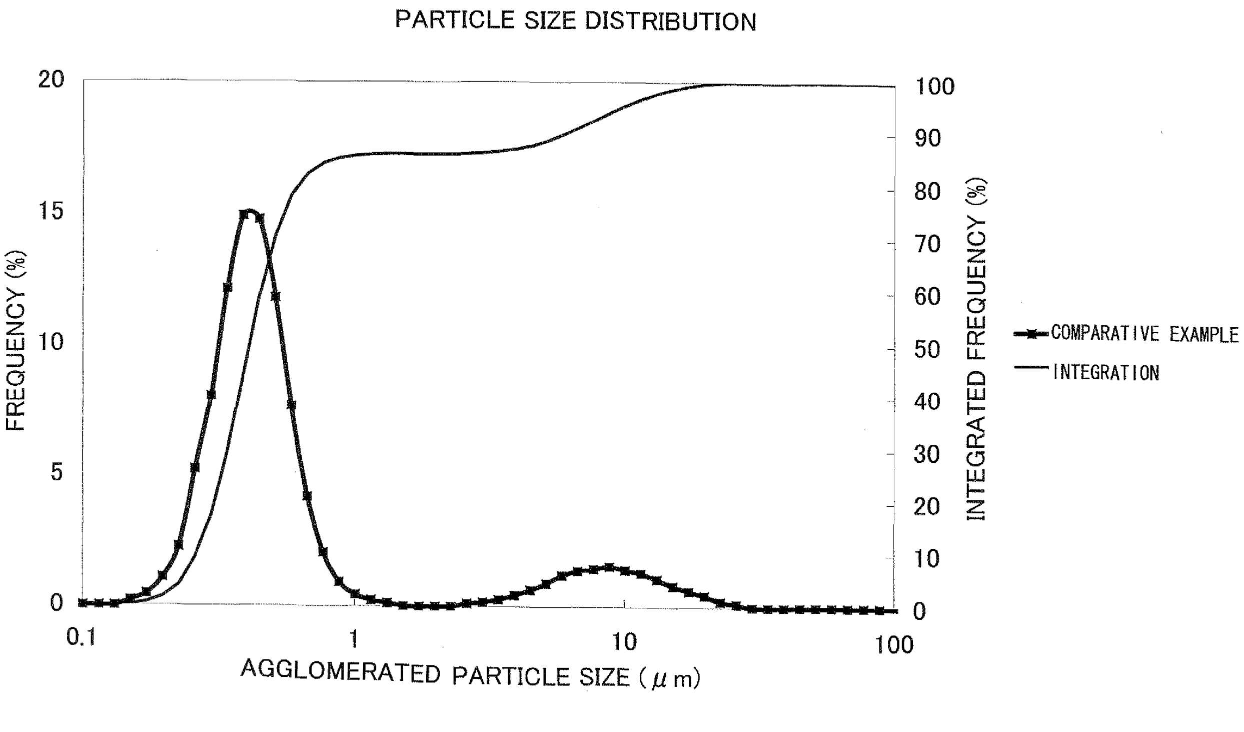
PARTICLE SIZE DISTRIBUTION
FREQUENCY (%)
INTEGRATED FREQUENCY (%)
AGGLOMERATED PARTICLE SIZE (μm)
COMPARATIVE EXAMPLE
INTEGRATION
0
5
10
15
20
0
10
20
30
40
50
60
70
80
90
100
0.1
1
10
100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004145325 A
- JP 2006099006 A
- JP 2007034224 A
- JP 2006206414 A
- EP 0860478 A1
- WO 2006045012 A2
- US 5900315 A
- EP 1502933 A2
- EP 1204006 A1
- DE 974793
- DE 974974
- DE 909339
- JP 3229174 B
- JP 61050882 A
- JP 57002641 A
- JP 62171913 A